# EUROPÄISCHE PATENTSCHRIFT

(11) **EP 2 052 619 B1**
(45) Veröffentlichungstag und Bekanntmachung des Hinweises auf die Patenterteilung: **30.12.2009**
(21) Anmeldenummer: 07020939.0
(22) Anmeldetag: 25.10.2007
(51) Int. Cl.: A22C 11/02

(54) **Verfahren und Vorrichtung zum Abfüllen von pastösen Massen**
Method and device for filling paste-like masses
Procédé et dispositif destinés au remplissage de masses pâteuses

(43) Veröffentlichungstag der Anmeldung: 29.04.2009
(73) Patentinhaber: Albert Handtmann Maschinenfabrik GmbH & Co. KG, 88400 Biberach (DE)
(72) Erfinder: Staudenrausch, Martin, 88400 Biberach (DE)
(74) Vertreter: Grünecker, Kinkeldey, Stockmair & Schwanhäusser Anwaltssozietät

(56) Entgegenhaltungen:
- US-A- 4 920 611
- US-A- 5 197 914
- US-A- 5 203 735
- US-A- 5 378 193
- US-A- 5 466 184

## Beschreibung

Die Erfindung betrifft eine Vorrichtung und ein Verfahren zum Abfüllen von pastöser Masse in eine Hülle. Eine Vorrichtung und ein Verfahren gemäß dem Stand der Technik sind aus US-A-5 197 914 bekannt.

Beim Füllen von pastöser Masse in eine Hülle, beispielsweise einen Darm, Wursthülle oder in einen Schlauchbeutel, wird dieser über ein Füllrohr geschoben, durch das dann die Masse in die Hülle gefüllt wird. Um diese Hülle prall und luftfrei füllen zu können, wird über die Hülle am Ende des Füllrohres eine sogenannte Darmbremse geschoben, um die Hülle entsprechend zu bremsen und die Luft auszustreichen, die sich zwischen Füllrohr und Hülle befindet. Je nach zu füllender Masse, insbesondere bei grobstückigem Kochschinken, kann es trotzdem zu Blasenbildung unter der Hülle kommen.

Um dies zu vermeiden, gibt es mehrere Möglichkeiten, wie beispielsweise der Einsatz von "gestippten" Därmen. Diese Därme bzw. Hüllen haben in regelmäßigen Abständen kleine Löcher, durch die die Luft durch den in der gefüllten Wurst herrschenden Innendruck entweichen kann. Obwohl die Luft je nach Abstand und Größe der Löcher entweichen kann, bleiben meist noch kleine Luftbläschen zurück. Unter Umständen kann auch beim Aufspreizen des Darmes durch die Fleischstücke nach der Darmbremse Luft durch die Öffnungen mit in die sich bildende Wurst hineingezogen werden. Eine solche Hülle bzw. ein solcher Darm ist nicht steril und Masse kann austreten.

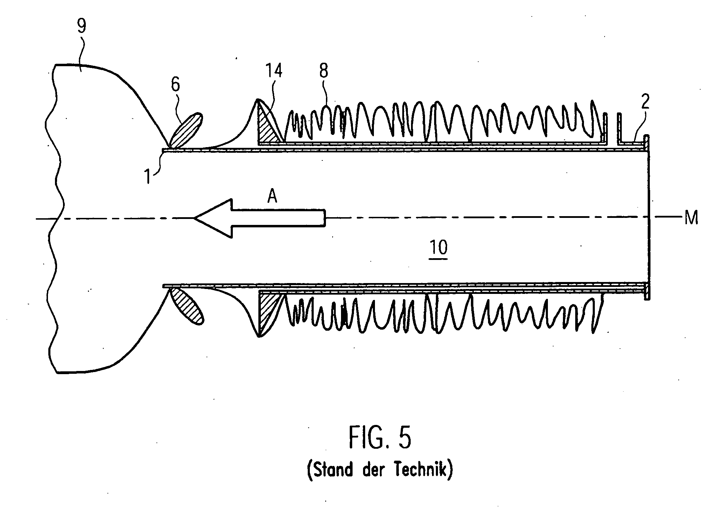

Als weitere Möglichkeit kommt die Verwendung eines Vakuumrohres mit Kaliberring in Frage. Wie insbesondere aus Fig. 5 hervorgeht, ist hier ein Vakuumrohr konzentrisch über dem Füllrohr 1 angeordnet. Über dieses Vakuumrohr wird nun die Wursthülle 8 geschoben, in die die pastöse Masse gefüllt werden soll. Am Ende des Vakuumrohres 2 wird der Kaliberring 14 aufgesteckt, über den dann die Hülle 8 geführt und abgezogen wird. Dieser Kaliberring spreizt die Hülle ungefähr auf das Nennkaliber der Wursthülle und dichtet somit die Hülle an dieser Stelle ab. Nun wird noch die Darmbremse auf das eigentliche Füllrohr aufgeschoben (oder das Füllrohr in die Darmbremse eingefahren). Wird nun am Vakuumrohr das Vakuum angesetzt, kann die Luft unter der Hülle zwischen dem Kaliberring und der Darmbremse abgesaugt werden. Zwar kann mit dieser Lösung die Luft unter der Hülle gut abgesaugt werden, jedoch ergibt sich ein stark erhöhter Handlingaufwand beim Darmwechsel. Zuerst muss nämlich der Kaliberring entfernt werden, dann die geraffte Wursthülle auf das Vakuumrohr geschoben werden, danach muss der Kaliberring 14 wieder auf dem Vakuumrohr 2 abdichtend befestigt werden. Anschließend muss noch die Wursthülle manuell über den Kaliberring gezogen werden, wobei empfindliche Därme verletzt werden können. Erst dann kann das Füllrohr wieder in die Darmbremse eingefahren werden. Darüber hinaus ist für jedes zu füllende Kaliber ein passender Kaliberring notwendig.

Hiervon ausgehend liegt der vorliegenden Erfindung die Aufgabe zugrunde, eine Vorrichtung und ein Verfahren zum Abfüllen von pastösen Massen bereitzustellen, die auf einfache und zuverlässige Art und Weise verhindern, dass es zu Blasenbildung unter der Hülle kommt.

Erfindungsgemäß wird diese Aufgabe durch die Merkmale der Ansprüche 1 und 10 gelöst.

Gemäß der vorliegenden Erfindung kann die zweite Darmbremse in einem Arbeitsgang mit der herkömmlichen ersten Darmbremse angeordnet werden. Dabei kann entweder die Darmbremse über das Füllrohr geschoben werden oder aber das Füllrohr in die Darmbremsen eingefahren werden. Die erfindungsgemäße Anordnung kann für unterschiedliche Kaliber verwendet werden, da sie nur zum Füllrohr passend sein muss, nicht aber zum gefüllten Kaliber. Der Darm bzw. die Hülle muss nicht mehr über einen Kaliberring gezogen werden, was in der Praxis sehr zeitintensiv ist, je nachdem wie stramm der Darm auf den Kaliberring drückt. Insgesamt ergibt sich also ein vereinfachtes Handling, wobei auch die Wursthülle geschont wird." In Richtung Füllrohr" bedeutet hier einfach nach innen, unabhängig davon ob die erste oder zweite Darmbremse nun dichtend gegen die Oberfläche des Füllrohrs oder gegebenenfalls gegen ein Vakuumrohr drücken.

Gemäß einer bevorzugten Ausführungsform umfasst die Einrichtung zum Absaugen nämlich ein Vakuumrohr, das am Füllrohr angeordnet ist. So kann die Luft unter der Hülle zwischen der ersten und zweiten Darmbremse über einen Hohlraum zwischen Vakuumrohr und Füllrohr abgesaugt werden. Auch hier ergibt sich eine sehr einfache Anordnung der ersten und zweiten Darmbremse, indem die Darmbremsen einfach über das Füllrohr bzw. Vakuumrohr geschoben werden können, oder aber das Füllrohr mit dem Vakuumrohr in die Darmbremse eingefahren werden kann. Über das Vakuumrohr kann auf einfache Art und Weise Luft von unten unter der Hülle abgesaugt werden.

Der Ausdruck "dass das Vakuumrohr am Füllrohr angeordnet ist" schließt eine Anordnung außerhalb oder innerhalb des Füllrohrs ein.

Gemäß einer bevorzugten Ausführungsform ist das Vakuumrohr um das Füllrohr herum angeordnet und die erste Darmbremse drückt die Hülle gegen das Füllrohr und die zweite Darmbremse drückt die Hülle gegen das Vakuumrohr. Eine solche Ausführungsform ist einfach herzustellen, indem beispielsweise das Vakuumrohr über einen Teil des Füllrohres geschoben wird. Dadurch, dass die zweite Darmbremse auf das Vakuumrohr drückt, und somit die Hülle auf dem Vakuumrohr abdichtet und die erste Darmbremse die Hülle gegen das weiter innen liegende Füllrohr drückt, ergibt sich eine Stufe, so dass die Hülle von dem Vakuumrohr schräg zum Füllrohr hin verläuft. Dies ermöglicht ein besonders gutes Absaugen der Luft unter der Hülle und eine gute Spannung.

Es ist jedoch auch möglich, dass das Vakuumrohr und das Füllrohr derart angeordnet sind, dass die erste und zweite Darmbremse die Hülle gegen das Vakuumrohr drücken. Über eine Öffnung im Vakuumrohr kann dann die Luft über den Hohlraum zwischen Vakuumrohr und Füllrohr abgesaugt werden.

Vorteilhafterweise sind die erste und zweite Darmbremse als ein Bauteil mit zwei Bremsringen ausgebildet. Eine solche Anordnung ist besonders kompakt und kann einfach gehandhabt und hergestellt werden.

Es ist jedoch auch möglich, die erste und zweite Darmbremse als voneinander getrennte Bauteile auszubilden, die getrennt voneinander auf das Füllrohr und das Vakuumrohr aufschiebbar sind. Je nach Vorsatzmaschine (z. B. Klippmaschine) ist der Verfahrweg der Darmbremse oder des Füllrohres in die Darmbremse vorgegeben. Unter Umständen reicht dieser Verfahrweg nicht aus, um mit dem Füllrohr aus beiden Darmbremsen herauszufahren. In diesen Fällen können dann die erste und zweite Darmbremse einzeln aufgeschoben werden. Dabei kann die zweite Darmbremse derart ausgebildet sein, dass sie sich dann beim Füllen an der ersten Darmbremse abstützt.

Vorteilhafterweise umfasst die erfindungsgemäße Vorrichtung ein Gehäuse, das einen Raum zwischen der ersten und zweiten Darmbremse zu der Hülle abdichtet. Sind die beiden Darmbremsen dicht miteinander verbunden, kann auch ein gestippter Darm verwendet werden. Dieser wird in bestimmten Fällen verwendet, um größere Kochverluste zu erreichen.

In vorteilhafter Weise weist das Gehäuse einen Vakuumanschluss auf, so dass in dem Raum zwischen den Darmbremsen ein Unterdruck erzeugbar ist. Die Größe des Unterdrucks muss nicht identisch mit der Größe des Unterdrucks zum Absaugen der Luft unter der Hülle sein. Dadurch, dass der Raum zwischen den beiden Darmbremsen ebenfalls mit Vakuum beaufschlagt werden kann, können auch besonders gut gestippte Därme verwendet werden, ohne dass Luft durch die Öffnungen nachgezogen wird.

Gemäß einer bevorzugten Ausführungsform drücken die erste und die zweite Darmbremse beide gegen das Füllrohr. Wenn nun das oben beschriebene Gehäuse den Raum zwischen erster und zweiter Darmbremse zu der Hülle abdichtet und in dem Raum ein Unterdruck erzeugt wird, kann Luft unter einer gestippten Hülle durch die Öffnungen in der Hülle über den Vakuumanschluss des Raums abgesaugt werden. Somit kann dann das Gehäuse mit dem Vakuumanschluss die Einrichtung zum Absaugen darstellen. Ein extra Vakuumrohr ist dann nicht notwendig. Somit kann bei gestippten Hüllen sichergestellt werden, dass keine Luft unter der Hülle der gefüllten Wurst verbleibt. Diese Anordnung ist besonders einfach zu realisieren.

Die vorliegende Erfindung wird nachfolgend unter Bezugnahme der folgenden Figuren näher erläutert.
- Fig. 1: zeigt einen Längsschnitt durch eine erste Ausführungsform der vorliegenden Erfindung.
- Fig. 2: zeigt einen Längsschnitt durch eine zweite Ausführungsform der vorliegenden Erfindung.
- Fig. 3: zeigt einen Längsschnitt durch eine weitere Ausführungsform der vorliegenden Erfindung.
- Fig. 4: zeigt einen Längsschnitt durch eine weitere Ausführungsform der vorliegenden Erfindung.
- Fig. 5: zeigt einen Längsschnitt durch eine Vorrichtung zum Abfüllen von pastöser Masse gemäß dem Stand der Technik.

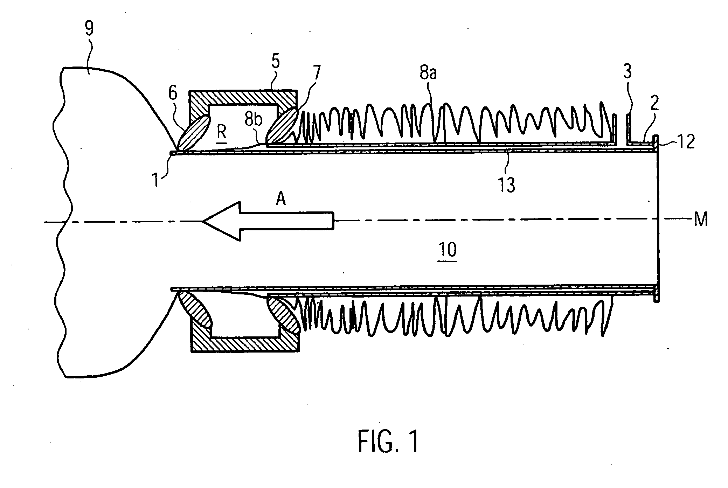

Fig. 1 zeigt eine erste Ausführungsform einer Vorrichtung zum Abfüllen von pastöser Masse gemäß der vorliegenden Erfindung. Die Vorrichtung umfasst ein Füllrohr 1, über das pastöse Masse 10 in eine Wursthülle 8 a, b ausgestoßen wird, um eine gefüllte Wurst 9 zu erzeugen. Das Füllgut wird dabei z. B. in bekannter Weise dem Füllrohr 1 über einen nicht dargestelltem Fülltrichter mit einem entsprechenden Förderwerk, beispielsweise einer Flügelzellenpumpe, zugeführt, so dass das Füllgut in Ausstoßrichtung A ausgestoßen werden kann.

Über das Füllrohr 1 ist hier konzentrisch ein Vakuumrohr 2 geschoben. Das Vakuumrohr 2 erstreckt sich bei dieser Ausführungsform nicht in voller Länge über das Füllrohr 1, so dass das Füllrohr 1 zumindest im Bereich des Ausstoßendes freigelegt ist. Das Vakuumrohr 2 ist dabei in Ausstoßrichtung nach vorne hin geöffnet, so dass sich ein offener Ringspalt ergibt. Zwischen Füllrohr 1 und Vakuumrohr 2 ergibt sich somit ein Hohlraum 13. Das Vakuumrohr 2 weist darüber hinaus eine Öffnung bzw. einen Anschluss 3 auf, zum Erzeugen eines Unterdrucks, wobei die Öffnung 3 über eine entsprechende, nicht dargestellte Leitung mit einer Pumpe verbunden ist. Das in Ausstoßrichtung A betrachtete hintere Ende des Hohlraumes 13 ist hier z.B. durch eine Ringscheibe 12 verschlossen. Füllrohr und Vakuumrohr weisen vorzugsweise einen runden Querschnitt auf.

Im Bereich des Ausstoßendes des Füllrohrs 1 ist eine erste Darmbremse 6 vorgesehen, die die Wursthülle 8b in Richtung Füllrohr, d. h. nach innen drückt. Hier drückt die Darmbremse 6 gegen das Füllrohr 1. Die Darmbremse 6 weist dabei einen umlaufenden Bremsring aus elastischem Material auf, der so vorgespannt ist, dass er gegen die Hülle 1 drückt, um die Hülle in bekannter Weise zu bremsen und Luft auszustreichen, die sich zwischen Füllrohr und Hülle 8b befindet. Weiter weist die Vorrichtung eine zweite Darmbremse 7 auf, die ebenfalls nach innen, d. h. in Richtung Füllrohr drückt. Bei dieser Ausführungsform drückt die Darmbremse 7 gegen das Vakuumrohr, hier gegen den Endbereich des Vakuumrohres 2. Auch hier umfasst die Darmbremse 7 einen umlaufenden Bremsring aus elastischem Material, der so vorgespannt ist, dass er die Wursthülle dichtend gegen das Vakuumrohr 2 drückt. Wie insbesondere aus Fig. 1 hervorgeht, ist die Wursthülle 8a auf dem Vakuumrohr gerafft. Eine Einrichtung zum Absaugen von Luft unter der Hülle 8b umfasst hier also das Vakuumrohr 2 sowie den Hohlraum 13 mit dem Anschluss 3.

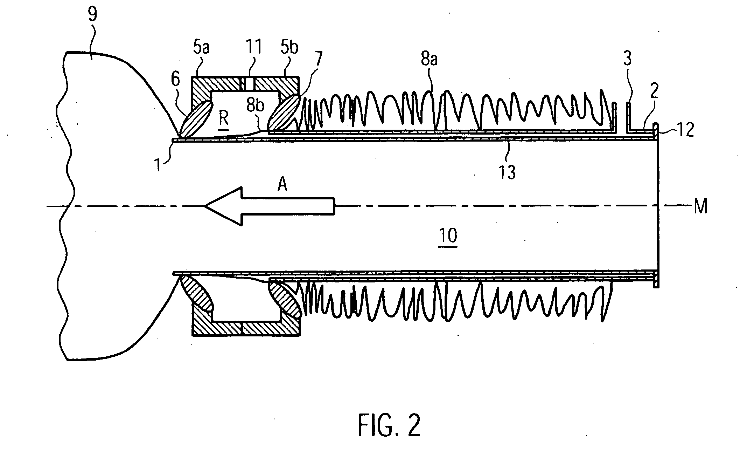

Bei dem in Fig. 1 gezeigten Ausführungsbeispiel sind die erste und zweite Darmbremse 6, 7 als ein Bauteil mit zwei Bremsringen ausgebildet. Dazu ist ein gemeinsames Bremsringgehäuse 5 vorgesehen. Eine derartige doppelte Darmbremse ist kompakt, kann einfach ausgebildet werden und ist darüber hinaus einfach anzubringen, indem sie über das Füllrohr bzw. das Vakuumrohr geschoben wird oder aber das Füllrohr, bzw. Vakuumrohr in die Darmbremse eingeschoben wird. Vorteilhafterweise ist der Raum R zwischen der ersten und zweiten Darmbremse 6, 7 durch das Gehäuse 5 zu der Hülle 8b hin abgedichtet. Dabei ist das Gehäuse 5 ebenfalls umlaufend angeordnet. Wenn hier auch nicht dargestellt, kann in dem Gehäuse eine Öffnung vorgesehen sein (siehe z. B. Fig. 2, Öffnung 11) über die ebenfalls zur Erzeugung eines Unterdrucks Luft aus dem Raum R abgepumpt werden kann. Sind die erste und zweite Darmbremse 6, 7 also dicht miteinander verbunden, so dass auch der Raum R evakuiert werden kann, kann auch ein gestippter Darm verwendet werden. Dieser wird in bestimmten Fällen verwendet um größere Kochverluste zu erreichen. Vorteilhafterweise kann die Darmbremse 7 hier für unterschiedliche Kaliber verwendet werden, da sie nur zum Vakuumrohr 2 passend sein muss, nicht aber zum gefüllten Kaliber, wie im Stand der Technik. Die Höhe des Vakuums im Raum R muss jedoch nicht mit dem Vakuum unter dem Vakuumrohr 2 identisch sein. Der Unterdruck im Raum R liegt etwa in einem Bereich von 100 - 500 mbar. Der Unterdruck im Hohlraum 13 liegt etwa in einem Bereich von 100 - 500 mbar.

Die Vorrichtung, die in Fig. 1 gezeigt ist, arbeitet wie folgt:
pastöse Masse 10, wie beispielsweise Wurstbrät etc., wird über die zuvor beschriebene Fördereinrichtung in Ausstoßrichtung A gefördert. Dadurch wird Wursthülle vom Füllrohr 1 gezogen. Die Wursthülle 8a ist dabei gerafft um das Vakuumrohr 2 angeordnet. Die Darmbremse 7 drückt die Wursthülle gegen das Vakuumrohr 2 und dichtet diese auf dem Vakuumrohr ab. Die Darmbremse 6 drückt die Wursthülle 8b gegen das Füllrohr 1 und dichtet die Hülle auch hier gegen das Füllrohr 1 ab. Über den Vakuumanschluss 3 wird Luft aus dem Hohlraum 13 gepumpt, so dass Luft unter der Hülle 8b zwischen der ersten und zweiten Darmbremse 6, 7 abgesaugt wird. Somit kommt es zu keiner Blasenbildung unter der Hülle. Gleichzeitig kann, wie zuvor beschrieben, auch der Raum R zwischen den Darmbremsen 6,7 über der Hülle 8b mit Vakuum beaufschlagt werden. Die gefüllte Wurst 9 weist keine Lufteinlagerungen auf.

Fig. 2 zeigt eine weitere Ausführungsform der vorliegenden Erfindung, die im Wesentlichen der in Fig. 1 gezeigten Ausführungsform entspricht, wobei jedoch die erste und zweite Darmbremse 6, 7 hier voneinander getrennte Bauteile sind, d. h. dass die doppelte Darmbremse zweiteilig ausgebildet ist. Dies bringt den Vorteil mit sich, dass die beiden Teile getrennt auf das Füllrohr bzw. Vakuumrohr aufbringbar sind. Das Gehäuse 5b der zweiten Darmbremse 7 stützt sich dann im eingebauten Zustand an dem Gehäuse 5a der ersten Darmbremse 6 ab. Gegebenenfalls ist hier noch eine Dichteinrichtung zum Abdichten der umlaufenden Gehäuseteile 5a, b vorgesehen. Die zweiteilige Ausbildung der doppelten Darmbremse ist vorteilhaft, da je nach Vorsatzmaschine (z. B. Klippmaschine) der Verfahrweg der Darmbremse oder des Füllrohrs in die Darmbremse vorgegeben ist. Unter Umständen reicht dieser Verfahrweg nicht aus, um mit dem Füllrohr aus beiden Darmbremsen herauszufahren. Durch die zweiteilige Ausbildung können die beiden Darmbremsen jedoch auch bei sehr kleinen Verfahrwegen und wenig Platz einfach und sicher angeordnet werden.

Auch bei dieser Ausführungsform kann wieder ein Vakuumanschluss 11 zum Evakuieren des Raumes R vorgesehen sein. Die Funktionsweise der in Fig. 2 gezeigten Ausführungsform entspricht der in Fig. 1 gezeigten.

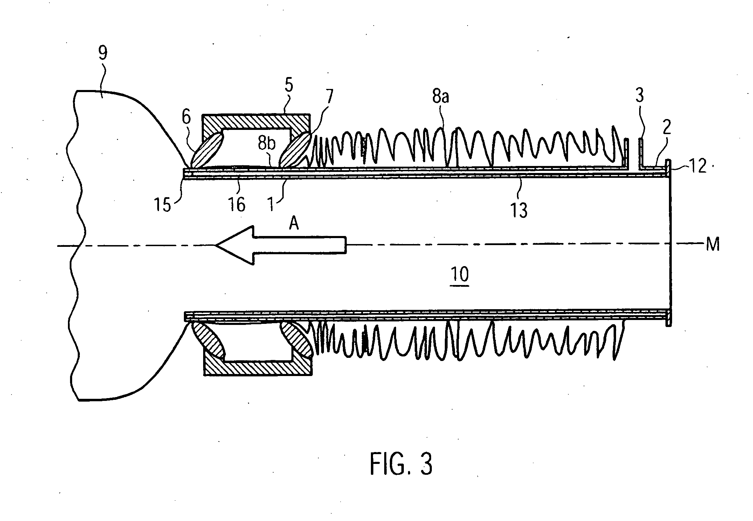

Fig. 3 zeigt eine weitere mögliche Ausführungsform der vorliegenden Erfindung. Dabei entspricht die in Fig. 3 gezeigte Ausführungsform den in den Figuren 1 und 2 gezeigten Ausführungsformen mit der Ausnahme, dass das Vakuumrohr 2 sich zumindest soweit bis in den Bereich des Ausstoßendes des Füllrohres 1 erstreckt, dass auch die erste Darmbremse 6 die Hülle gegen das Vakuumrohr 2 drückt. Der Hohlraum 13 ist dabei über eine an der in Ausstoßrichtung betrachteten hinteren Seite durch eine Verschlusseinrichtung 15 abgedichtet oder einfach verschweißt.

Wie im ersten und zweiten Ausführungsbeispiel drückt die zweite Darmbremse 7 die Hülle 8a ebenfalls gegen das Vakuumrohr 2. Um gemäß der vorliegenden Erfindung Luft unter der Hülle 8b zwischen der ersten und zweiten Darmbremse 6, 7 abzusaugen, ist in dem Vakuumrohr 2 zwischen den Darmbremsen mindestens eine Öffnung 16 vorgesehen, damit Luft über den Hohlraum 13 abgesaugt werden kann. Diese Ausführungsform kann selbstverständlich auch einen Vakuumanschluss 11 in dem ein- oder zweiteiligen Gehäuse 5 aufweisen.

Wenn hier auch nicht in den Figuren dargestellt, ist es auch möglich, dass das Vakuumrohr nicht außen um das Füllrohr 1 angeordnet ist, sondern sich zumindest teilweise entlang der Innenseite des Füllrohres 1 erstreckt, wobei dann das Füllrohr 1 eine entsprechende Öffnung aufweist, um Luft unter der Hülle 8b zwischen den beiden Darmbremsen 6 und 7 über den nach außen abgedichteten Hohlraum zwischen Vakuumrohr und Füllrohr über eine entsprechende Vakuumöffnung abzupumpen.

Unabhängig von der genauen Ausgestaltung und Anordnung des Vakuumrohres ist es lediglich wesentlich, dass die Hülle 8a,b durch eine doppelte Darmbremse 6,7 nach innen, d. h. in Richtung Füllrohr, gedrückt und abgedichtet wird und die Luft unterhalb der Hülle 8b zwischen den beiden Darmbremsen 6,7 über einen Hohlraum 13 zwischen Füllrohr 1 und Vakuumrohr 2 abgepumpt werden kann. Eine solche doppelte Darmbremse kann einfach auf das Füllrohr bzw. Vakuumrohr aufgebracht werden. Die zweite Darmbremse 7 muss nicht an ein entsprechendes Darmkaliber angepasst werden sondern passt für alle Kaliber, die mit dem gleichen Füllrohr bzw. Vakuumrohr gefüllt werden können. Dies vereinfacht das Handling erheblich. Dadurch, dass die Darmbremse 7 im Wesentlichen in einem Arbeitsgang mit der Darmbremse 6 auf das Füllrohr aufgebracht werden kann, vereinfacht sich das Verfahren deutlich.

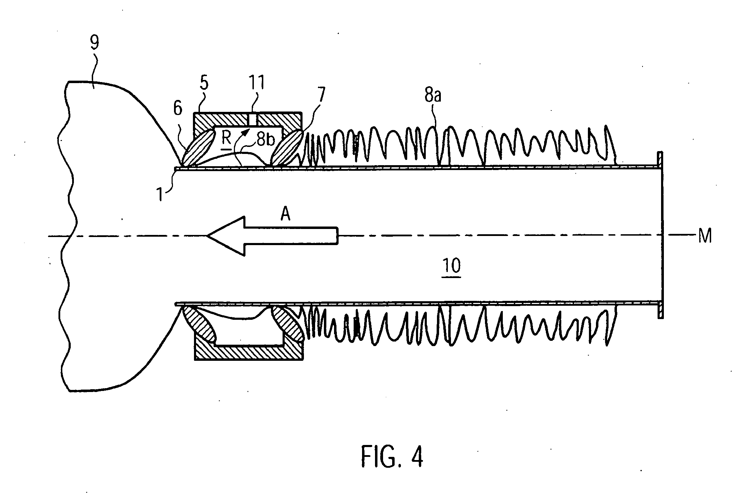

Fig. 4 zeigt eine weitere mögliche Ausführungsform der vorliegenden Erfindung.

Auch bei dieser Ausführungsform sind, wie in den in den Figuren 1 bis 3 gezeigten Ausführungsbeispielen, eine erste und zweite Darmbremse 6, 7 angeordnet, die hier beide gegen das Füllrohr 1 drücken und die Hülle 8b gegen das Füllrohr 1 abdichten. Diese Anordnung eignet sich für gestippte Hüllen, die wie zuvor beschrieben, Öffnungen aufweisen. Die Einrichtung zum Absaugen von Luft unter der Hülle 8b umfasst hier das Gehäuse 5, das ein- oder zweiteilig ausgebildet sein kann, und das den Raum R zwischen der ersten und zweiten Darmbremse 6, 7 zur Hülle 8b abdichtet. Das Gehäuse 5 weist hier den Vakuumanschluss 11 auf, um in dem Raum R einen Unterdruck über eine nicht dargestellte Pumpe erzeugen zu können. Somit besteht die Möglichkeit, das Vakuum nur im Raum R anzulegen, so dass die Luft durch die Löcher in der Wursthülle unter der Hülle abgesaugt wird. In diesem Fall kann man auf das Vakuumrohr 2 verzichten. Dadurch, dass die Luft unter der Hülle 8b zwischen den Darmbremsen 6, 7 abgezogen wird, enthält die gefüllte Wurst 9 unter der Hülle keine Luftreste. Das in Fig. 4 gezeigte Ausführungsbeispiel ist vorteilhaft, da die doppelte Darmbremse in einfacher Art und Weise auf konventionelle Füllrohre 1 aufgesetzt werden kann. Dies vereinfacht das Handling entscheidend. Bei dem gestippten Darm bzw. der gestippten Hülle betragen die Öffnungen etwa 0,1 % der Hüllenoberfläche. Eine Öffnung weist etwa eine Größe von 0,1 mm bis 1 mm auf. Der in dem Raum R erzeugte Unterdruck liegt ebenfalls in einem Bereich von 100 bis 500 mbar. Der Aufbau der doppelten Darmbremse 6, 7 entspricht dabei dem Aufbau, wie er bei den vorherigen Ausführungsbeispielen beschrieben wurde.

## Patentansprüche

1. Vorrichtung zum Abfüllen von pastöser Masse (10) in eine Hülle (8) mit:
einem Füllrohr (1), über das die pastöse Masse (10) in die Hülle (9) geschoben wird,
einer im Bereich des Ausstoßendes des Füllrohres (1) angeordneten ersten Darmbremse (6), die die Hülle (8 b) in Richtung Füllrohr (1) drückt und einer zweiten Darmbremse (7), die in Ausstoßrichtung betrachtet vor der ersten Darmbremse (6) angeordnet ist und die Hülle (8a) in Richtung Füllrohr drückt
**gekennzeichnet durch**
eine Einrichtung (2, 13, 3, 11, 5) zum Absaugen von Luft unter der Hülle (8b) zwischen der ersten und zweiten Darmbremse (6, 7).

2. Vorrichtung nach Anspruch 1, **dadurch gekennzeichnet, dass** die Einrichtung (2, 13, 3, 11, 5) zum Absaugen ein Vakuumrohr (2), das am Füllrohr (1) angeordnet ist, umfasst, so dass Luft unter der Hülle (8b) zwischen der ersten und zweiten Darmbremse (6, 7) über einen Hohlraum (13) zwischen Vakuumrohr (2) und Füllrohr (1) absaugbar ist.

3. Vorrichtung nach Anspruch 2, **dadurch gekennzeichnet, dass** das Vakuumrohr (2) um das Füllrohr (1) herum angeordnet ist derart, dass zumindest im Bereich des Ausstoßendes das Füllrohr (1) freigelegt ist, und die erste Darmbremse (6) die Hülle (8b) gegen das Füllrohr (1) drückt und die zweite Darmbremse (7) die Hülle (8a) gegen das Vakuumrohr (2) drückt.

4. Vorrichtung nach Anspruch 2, **dadurch gekennzeichnet, dass** das Vakuumrohr (2) um das Füllrohr (1) herum angeordnet ist und die erste und die zweite Darmbremse (6) die Hülle (8a, b) gegen das Vakuumrohr (2) drücken.

5. Vorrichtung nach mindestens einem der Ansprüche 1 bis 4, **dadurch gekennzeichnet, dass** die erste und zweite Darmbremse (6, 7) als ein Bauteil mit zwei Bremsringen ausgebildet sind.

6. Vorrichtung nach mindestens einem der Ansprüche 1 bis 4, **dadurch gekennzeichnet, dass** die erste und zweite Darmbremse (6, 7) voneinander getrennte Bauteile sind, die getrennt voneinander auf das Füllrohr (1) und das Vakuumrohr (2) aufbringbar sind.

7. Vorrichtung nach mindestens einem der Ansprüche 1 bis 6, **dadurch gekennzeichnet, dass** ein Gehäuse (5) einen Raum (R) zwischen der ersten und zweiten Darmbremse (6, 7) zu der Hülle (8b) abdichtet.

8. Vorrichtung nach Anspruch 7, **dadurch gekennzeichnet, dass** das Gehäuse (5) einen Vakuumanschluss (11) aufweist, so dass in dem Raum (R) ein Unterdruck erzeugbar ist.

9. Vorrichtung nach Anspruch 8, **dadurch gekennzeichnet, dass** die erste und die zweite Darmbremse (6, 7) gegen das Füllrohr (1) drücken derart, dass Luft unter einer gestippten Hülle (8b) durch die Öffnungen der Hülle (8b) über den Vakuumanschluss (11) des Raums absaugbar ist.

10. Verfahren zum Abfüllen von pastöser Masse in eine Hülle (8a, b), mit einer Vorrichtung nach mindestens einem der Ansprüche 1 bis 5 mit folgenden Schritten:
Ausstoßen der pastösen Masse in die Hülle (8b) über das Füllrohr (1),
wobei die zweite Darmbremse (7) die Hülle in Richtung Füllrohr (1) drückt und auch die erste Darmbremse (6) die Hülle (8b) in Richtung Füllrohr (1) drückt, sowie
Absaugen der Luft unter der Hülle (8b) zwischen der ersten und zweiten Darmbremse (6, 7).

11. Verfahren nach Anspruch 10, **dadurch gekennzeichnet, dass** die Luft unter der Hülle (8b) zwischen der ersten und zweiten Darmbremse (6, 7) abgesaugt wird, indem zwischen dem Füllrohr (1) und einem am Füllrohr (1) angeordneten Vakuumrohr (2) ein Unterdruck erzeugt wird.

12. Verfahren nach Anspruch 10 oder 11, **dadurch gekennzeichnet, dass** die zweite Darmbremse (7) die Hülle (8a) gegen das Vakuumrohr drückt und die erste Darmbremse (6) die Hülle (8b) gegen das Füllrohr (1) drückt, oder die erste und zweite Darmbremse (7, 8) die Hülle (8a, b) gegen das Vakuumrohr (2) drücken.

13. Verfahren nach mindestens einem der Ansprüche 10 bis 12, **dadurch gekennzeichnet, dass** ein Gehäuse (5) einen Raum (R) zwischen erster und zweiter Darmbremse (6, 7) und der Hülle (8b) abdichtet, wobei ein Unterdruck in diesem Raum (R) erzeugt wird.

14. Verfahren nach Anspruch 13, **dadurch gekennzeichnet, dass** die erste und zweite Darmbremse (6, 7) gegen das Füllrohr drücken und Luft unter einer gestippten Hülle (8b) über die Öffnungen in der Hülle durch den Unterdruck im Raum abgesaugt wird.

## Claims

1. A device for filling a paste-like substance (10) into a skin (8), comprising:
a filling tube (1) through which the paste-like substance (10) is pushed into the skin (8),
a first casing brake (6) arranged in the area of the ejection end of the filling tube (1) and pressing the skin (8b) in the direction of the filling tube (1), and,
a second casing brake (7) which, when seen in the direction of ejection, is arranged ahead of the first casing brake (6) and which presses the skin (8a) in the direction of the filling tube
**characterized by**
a unit (2, 13, 3, 11, 5) for sucking off air from below the skin (8b) between the first and the second casing brake (6, 7).

2. A device according to claim 1, **characterized in that** the suction unit (2, 13, 3, 11, 5) comprises a vacuum tube (2), which is arranged on the filling tube (1), so that air can be sucked off from below the skin (8b) between the first and the second casing brake (6, 7) via a hollow space (13) between the vacuum tube (2) and the filling tube (1).

3. A device according to claim 2, **characterized in that** the vacuum tube (2) is arranged around the filling tube (1) in such a way that the filling tube (1) is exposed at least in the area of the ejection end, and that the first casing brake (6) presses the skin (8b) against the filling tube (1) and that the second casing brake (7) presses the skin (8a) against the vacuum tube (2).

4. A device according to claim 2, **characterized in that** the vacuum tube (2) is arranged around the filling tube (1) and that the first and the second casing brake (6, 7) press the skin (8a, b) against the vacuum tube (2).

5. A device according to at least one of the claims 1 to 4, **characterized in that** the first and the second casing brake (6, 7) are implemented as a component with two brake rings.

6. A device according to at least one of the claims 1 to 4, **characterized in that** the first and the second casing brake (6, 7) are separate components which are adapted to be attached separately from one another to the filling tube (1) and the vacuum tube (2).

7. A device according to at least one of the claims 1 to 6, **characterized in that** a housing (5) seals a chamber (R) between the first and the second casing brake (6, 7) against the skin (8b).

8. A device according to claim 7, **characterized in that** the housing (5) has a vacuum connection (11) so that a vacuum can be generated in said chamber (R).

9. A device according to claim 8, **characterized in that** the first and the second casing brake (6, 7) press against the filling tube (1) in such a way that air below a perforated skin (8b) can be sucked off through the openings of said skin (8b) via the vacuum connection (11) of the chamber.

10. A method of filling a paste-like substance into a skin (8a, b) with a device according to at least one of the claims 1 to 5, comprising the following steps:
ejecting the paste-like substance into the skin (8b) through the filling tube (1),
wherein the second casing brake (7) presses the skin in the direction of the filling tube (1) and also the first casing brake (6) presses the skin (8b) in the direction of the filling tube (1), and
sucking the air off from below the skin (8b) between the first and the second casing brake (6, 7).

11. A method according to claim 10, **characterized in that** the air is sucked off from below the skin (8b) between the first and the second casing brake (6, 7) by generating a vacuum between the filling tube (1) and a vacuum tube (2) arranged on said filling tube (1).

12. A method according to claim 10 or 11, **characterized in that** the second casing brake (7) presses the skin (8a) against the vacuum tube and that the first casing brake (6) presses the skin (8b) against the filling tube (1), or that the first and the second casing brake (6, 7) press the skin (8a, b) against the vacuum tube (2).

13. A method according to at least one of the claims 10 to 12, **characterized in that** a housing (5) seals off a chamber (R) between the first and the second casing brake (6, 7) and the skin (8b), a vacuum being generated in said chamber (R).

14. A method according to claim 13, **characterized in that** the first and the second casing brake (6, 7) press against the filling tube and that air is sucked off from below a perforated skin (8b) through the openings in said skin due to the vacuum in said chamber.

## Revendications

1. Dispositif destiné au remplissage de masse pâteuse (10) dans une gaine (8), comprenant :
un tube de remplissage (1), au travers duquel la masse pâteuse (10) est poussée dans la gaine (8),
un premier frein de boyau (6), qui est disposé dans la zone de l'extrémité d'éjection du tube de remplissage (1) et presse la gaine (8b) en direction du tube de remplissage (1), et
un second frein de boyau (7) qui, vu dans la direction d'éjection, est disposé en amont du premier frein de boyau (6) et presse la gaine (8a) en direction du tube de remplissage,
**caractérisé par**
un dispositif (2, 13, 3, 11, 5) pour l'aspiration d'air au-dessous de la gaine (8b) entre le premier et le second frein de boyau (6, 7).

2. Dispositif suivant la revendication 1, **caractérisé en ce que** le dispositif d'aspiration (2, 13, 3, 11, 5) comprend un tube à vide (2) disposé sur le tube de remplissage (1), de sorte que de l'air peut être aspiré au-dessous de la gaine (8b) entre le premier et le second frein de boyau (6, 7) au travers d'un espace creux (13) entre le tube à vide (2) et le tube de remplissage (1).

3. Dispositif suivant la revendication 2, **caractérisé en ce que** le tube à vide (2) est disposé tout autour du tube de remplissage (1), de telle sorte que le tube de remplissage (1) est dégagé au moins dans la zone de l'extrémité d'éjection, et le premier frein de boyau (6) presse la gaine (8b) contre le tube de remplissage (1) et le second frein de boyau (7) presse la gaine (8a) contre le tube à vide (2).

4. Dispositif suivant la revendication 2, **caractérisé en ce que** le tube à vide (2) est disposé tout autour du tube de remplissage (1), et le premier et le second frein de boyau (6, 7) pressent la gaine (8a, b) contre le tube à vide (2).

5. Dispositif suivant l'une au moins des revendications 1 à 4, **caractérisé en ce que** le premier et le second frein de boyau (6, 7) sont réalisés sous forme d'un composant avec deux bagues de freinage.

6. Dispositif suivant l'une au moins des revendications 1 à 4, **caractérisé en ce que** le premier et le second frein de boyau (6, 7) sont des composants séparés l'un de l'autre, qui peuvent être placés séparément l'un de l'autre sur le tube de remplissage (1) et sur le tube à vide (2).

7. Dispositif suivant l'une au moins des revendications 1 à 6, **caractérisé en ce qu'**un carter (5) étanchéifie un espace (R) entre le premier et le second frein de boyau (6, 7) par rapport à la gaine (8b).

8. Dispositif suivant la revendication 7, **caractérisé en ce que** le carter (5) présente un raccord à vide (11), de sorte qu'une dépression peut être générée dans l'espace (R).

9. Dispositif suivant la revendication 8, **caractérisé en ce que** le premier et le second frein de boyau (6, 7) pressent contre le tube de remplissage (1), de telle sorte que de l'air peut être aspiré au-dessous d'une gaine piquée (8b) au travers des orifices de la gaine (8b) par l'intermédiaire du raccord à vide (11) de l'espace.

10. Procédé de remplissage de masse pâteuse dans une gaine (8a, b) par un dispositif suivant l'une au moins des revendications 1 à 5, comprenant les étapes suivantes :
éjection de la masse pâteuse dans la gaine (8b) au travers du tube de remplissage (1),
le second frein de boyau (7) pressant alors la gaine en direction du tube de remplissage (1) et le premier frein de boyau (6) pressant également la gaine (8b) en direction du tube de remplissage (1) et
aspiration de l'air au-dessous de la gaine (8b) entre le premier et le second frein de boyau (6, 7).

11. Procédé suivant la revendication 10, **caractérisé en ce que** l'air est aspiré au-dessous de la gaine (8b) entre le premier et le second frein de boyau (6, 7), une dépression étant générée entre le tube de remplissage (1) et un tube à vide (2) disposé sur le tube de remplissage (1).

12. Procédé suivant l'une des revendications 10 et 11, **caractérisé en ce que** le second frein de boyau (7) presse la gaine (8a) contre le tube à vide et le premier frein de boyau (6) presse la gaine (8b) contre le tube de remplissage (1), ou le premier et le second frein de boyau (6, 7) pressent la gaine (8a, b) contre le tube à vide (2).

13. Procédé suivant l'une au moins des revendications 10 à 12, **caractérisé en ce qu'**un carter (5) étanchéifie un espace (R) entre le premier et le second frein de boyau (6, 7) et la gaine (8b), une dépression étant alors générée dans cet espace (R).

14. Procédé suivant la revendication 13, **caractérisé en ce que** le premier et le second frein de boyau (6, 7) pressent contre le tube de remplissage et de l'air est aspiré au-dessous d'une gaine piquée (8b) au travers des orifices de la gaine par la dépression dans l'espace.
